# EUROPEAN PATENT APPLICATION

(11) **EP 3 667 543 A1**
(43) Date of publication of application: **17.06.2020**
(21) Application number: 19210285.3
(22) Date of filing: 20.11.2019
(51) Int. Cl.: G06F 21/71, H04L 9/08

(54) **SELF-PROVISIONING AND PROTECTION OF A SECRET KEY**

(30) Priority: 14.12.2018 US 201816220412
(71) Applicant: NXP USA, Inc., Austin TX 78735 (US)
(72) Inventor: Doll, Stefan, Redhill, Surrey RH1 1QZ (GB); Soja, Richard, Redhill, Surrey RH1 1QZ (GB); Jain, Sandeep, Redhill, Surrey RH1 1QZ (GB); Singh, Pradip, Redhill, Surrey RH1 1QZ (GB); Satsangi, Dhruv, Redhill, Surrey RH1 1QZ (GB); Sharma, Vivek, Redhill, Surrey RH1 1QZ (GB)
(74) Representative: Miles, John Richard

(57) **Abstract**

A device is disclosed. The device includes a read-only memory (ROM), a random key generator, a lifecycle controller, an access port and a processor. The processor is configured, based on a lifecycle status, to cause the random key generator a secret key and store the secret key in the ROM. The lifecycle controller is configured to disable an external access via the access port until they secret key is stored in the ROM.

## Description

### BACKGROUND

In some semiconductor devices, a secret key is permanently stored in read only memory (ROM) for encryption/decryption of information. Typically, the secret key is stored internally in the chip, hence only the sub-systems inside the chip can read and use the secret key.

Typically, the devices are manufactured and tested by different entities and in the stream of design, manufacturing, testing and delivery of the devices to the customers, a known or compromised secret key may be stored. Subsequently, the secret key may be used to gain access to the device when the device is in use in the field.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

In one embodiment, a device is disclosed. The device includes a read-only memory (ROM), a random key generator, a lifecycle controller, an access port and a processor. The processor is configured, based on a lifecycle status, to cause the random key generator a secret key and store the secret key in the ROM. The lifecycle controller is configured to disable an external access via the access port until they secret key is stored in the ROM.

In another embodiment, a method for self-provisioning a device is disclosed. The method includes reading a lifecycle status when the device is powered on. If the lifecycle status indicates that the device is not initialized, a secret key is generated and the secret key is stored in a non-volatile memory. After storing the secret key, the lifecycle status is advanced and stored in the memory. An access port of the device is enabled after advancing the lifecycle status. The access port remains disabled if the lifecycle status indicates that the device is not initialized.

In some examples, the lifecycle controller is configured to advance the lifecycle status after the secret key is stored in the ROM. In some examples, the access port is a test port that allows testing of functional modules. In another example, the access port is a debug port that allows debugging of functional modules. The lifecycle controller is configured to disable the access port when the access port is used for changing the lifecycle status. The device may also include a boot ROM to store initialization programming instructions that are executed when the device is power up.

### BRIEF DESCRIPTION OF THE DRAWINGS

So that the manner in which the above recited features of the present disclosure can be understood in detail, a more particular description of the disclosure, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments. Advantages of the subject matter claimed will become apparent to those skilled in the art upon reading this description in conjunction with the accompanying drawings, in which like reference numerals have been used to designate like elements, and in which:
FIG. 1 shows a block diagram of a device including a key protection mechanism in accordance with one or more embodiments; and
FIGS. 2 and 3 show flow diagrams of the initialization of the device and enabling ports in accordance with one or more embodiments

Note that figures are not drawn to scale. Intermediate steps between figure transitions have been omitted so as not to obfuscate the disclosure. Those intermediate steps are known to a person skilled in the art.

### DETAILED DESCRIPTION

Many well-known manufacturing steps, components, and connectors have been omitted or not described in details in the description so as not to obfuscate the present disclosure.

Secret keys are typically used for encryption and decryption of data. In symmetrical encryption mechanism, when data is encrypted using a secret key, the data can only be decrypted using the same secret key. Therefore, it is important to protect the secret key such that the key can never become known outside of the device. The secret key cannot be tempered with after the provisioning of the device.

When a new device is manufactured, it is possible for an attacker to install a known key and then use the key to gain access to the device when the device is in use in the field. For example, the operating software installed in the device may be encrypted by a secret key. If the secret key is compromised during the manufacturing and/or testing of the device, the attacker may alter the operating software to insert programming instructions that can later be used to gain access to the device.

The secret key is installed in a one time programmable read only memory using trusted code without any external access. The manufacturer can equip the device with an individual secret key without ever having to learn its value. Having the secret key internally generated and installed avoids accidental or malicious exposure of the secret key. The access to the secret key is blocked based on an initialization lifecycle status.

The embodiments described herein provides a mechanism to block external access to the device until the device self-initializes itself by generating and storing a secret key in a non-volatile memory inside the device. A read-only memory (ROM) may be used for storing the secret key. Typically, data written in a read only memory (ROM) may not be altered. In some examples, the ROM is accessible only from inside the device so that the secret key cannot be read from outside the device. In other examples, access to the device using external ports is blocked if the initialization lifecycle is not in a preselected status.

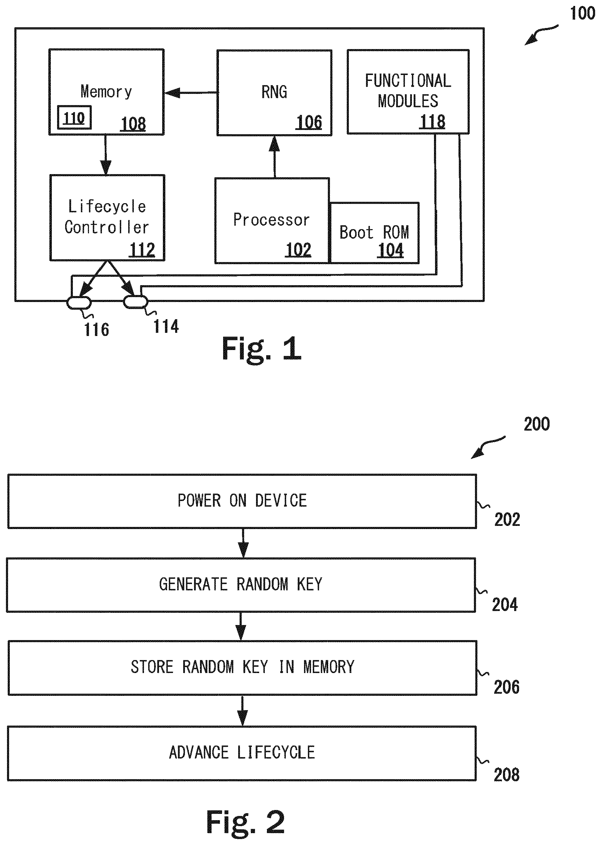

Figure 1 shows a device 100 that includes a processor 102. The device 100 includes functional modules 118 to perform function for which the device 100 is designed for. The device 100 may include a boot ROM 104 to execute a device startup procedure with the help of the processor 102. The boot ROM 104 may also include programming instructions for executing an initializing life cycle. The device 100 includes a random number generator (RNG) 106 to generate a random word. It should be noted that RNG 106 generates a secret key that can be a numeric random number or a random alphanumeric word or a random code consisting only letters. The device includes a ROM 108 for storing the secret key. The device 100 may be configured such that the ROM 108 cannot be read from outside the device using external communication ports, such as a test port 116 or a debug port 114. The ROM 108 is a one time programmable only memory. The ROM 108 may be fuse based memory in some examples. The ROM 108 may be a flash memory in other examples. A person skilled in the art would appreciate that other types of ROMs may be used. In some examples, the test port 116 and the debug port 114 may be implemented in one combined port. In some embodiments, the processor 102 may provide a random seed to the RNG 106. The random seed is a number used to initialize a pseudorandom number generator in the RNG 106.

The debug port 114 and the test port 116 are coupled to the functional modules 118 and are used for testing and debugging the device 100 using external tools. The functional modules 118 are not being described in details because the functions of the functional module 118 depends on the type of the device 100.

The device 100 includes a lifecycle controller 112 that controls the initialization life cycle and access to the test port 116 and the debug port 114. The ROM 108 includes a lifecycle status storage area 110 for storing the status of the life cycle. In some examples, the lifecycle controller 112 may include a non-volatile memory for storing the lifecycle status. The lifecycle controller 112 is configured to enable or disable the test port 116 and the debug port 114 based on the lifecycle status stored in the lifecycle status storage area 110.

Figure 2 shows a flow diagram 200 of the initialization of the device 100. Accordingly, at step 202, the device 100 is powered on and the lifecycle controller 112 checks the status of the lifecycle stored in the memory area 110. If the device 100 has not been initialized, at step 204, the processor 102 causes the RNG 106 to generate a random secret key. At step 206, the secret key is stored in the ROM 108. At step 208, the life cycle status is changed to "1", "initialized" or "provisioned" and stored in the memory area 110. Until the device 100 is initialized, the access to the test port 116 and the debug port 114 remains disabled.

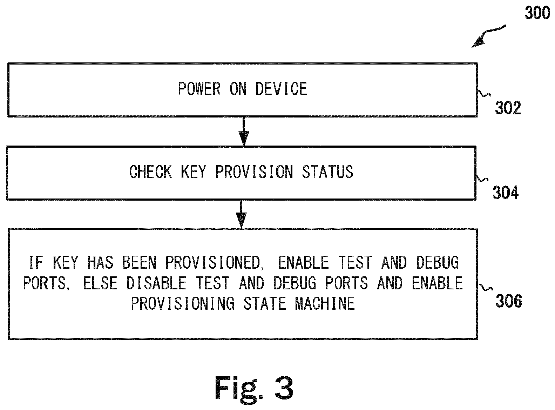

Figure 3 shows a flow diagram 300 of the process of enabling the access to the test port 116 and the debug port 114. Accordingly, at step 302, the device 100 is powered on. At step 304, the lifecycle status is checked. If the lifecycle status is "1", "initialized" or "provisioned", the lifecycle controller 112 enables access to the test port 116 and the debug port 114. In some examples, when the status is changed to "initialized" or "1", the RNG 106 may be disabled to prevent generation of another secret key when the device 100 has already been initialized.

It may be noted that if an attacker attempts to disturb the lifecycle status using the test port 116 or the debug port 114, for example, in an attempt to store a known secret key, the test port 116 and the debug port 114 are disabled, thus preventing the attacker to make any changes in the lifecycle status.

A device is disclosed. The device includes a read-only memory (ROM), a random key generator, a lifecycle controller, an access port and a processor. The processor is configured, based on a lifecycle status, to cause the random key generator a secret key and store the secret key in the ROM. The lifecycle controller is configured to disable an external access via the access port until they secret key is stored in the ROM.

Some or all of these embodiments may be combined, some may be omitted altogether, and additional process steps can be added while still achieving the products described herein. Thus, the subject matter described herein can be embodied in many different variations, and all such variations are contemplated to be within the scope of what is claimed.

While one or more implementations have been described by way of example and in terms of the specific embodiments, it is to be understood that one or more implementations are not limited to the disclosed embodiments. To the contrary, it is intended to cover various modifications and similar arrangements as would be apparent to those skilled in the art. Therefore, the scope of the appended claims should be accorded the broadest interpretation so as to encompass all such modifications and similar arrangements.

The use of the terms "a" and "an" and "the" and similar referents in the context of describing the subject matter (particularly in the context of the following claims) are to be construed to cover both the singular and the plural, unless otherwise indicated herein or clearly contradicted by context. Recitation of ranges of values herein are merely intended to serve as a shorthand method of referring individually to each separate value falling within the range, unless otherwise indicated herein, and each separate value is incorporated into the specification as if it were individually recited herein. Furthermore, the foregoing description is for the purpose of illustration only, and not for the purpose of limitation, as the scope of protection sought is defined by the claims as set forth hereinafter together with any equivalents thereof entitled to. The use of any and all examples, or exemplary language (e.g., "such as") provided herein, is intended merely to better illustrate the subject matter and does not pose a limitation on the scope of the subject matter unless otherwise claimed. The use of the term "based on" and other like phrases indicating a condition for bringing about a result, both in the claims and in the written description, is not intended to foreclose any other conditions that bring about that result. No language in the specification should be construed as indicating any non-claimed element as essential to the practice of the invention as claimed.

Preferred embodiments are described herein, including the best mode known to the inventor for carrying out the claimed subject matter. Of course, variations of those preferred embodiments will become apparent to those of ordinary skill in the art upon reading the foregoing description. The inventor expects skilled artisans to employ such variations as appropriate, and the inventor intends for the claimed subject matter to be practiced otherwise than as specifically described herein. Accordingly, this claimed subject matter includes all modifications and equivalents of the subject matter recited in the claims appended hereto as permitted by applicable law. Moreover, any combination of the above-described elements in all possible variations thereof is encompassed unless otherwise indicated herein or otherwise clearly contradicted by context.

## Claims

1. A device, comprising:
a read-only memory (ROM);
a random key generator,
a lifecycle controller;
an access port; and
a processor,
wherein the processor is configured, based on a lifecycle status, to cause the random key generator a secret key and store the secret key in the ROM, wherein the lifecycle controller is configured to disable an external access via the access port until they secret key is stored in the ROM.

2. The device of any preceding claim, wherein the lifecycle controller is configured to advance the lifecycle status after the secret key is stored in the ROM.

3. The device of any preceding claim, wherein the access port is a test port that allows testing of functional modules.

4. The device of any preceding claim, wherein the access port is a debug port that allows debugging of functional modules.

5. The device of any preceding claim, wherein the lifecycle controller is configured to disable the access port when the access port is used for changing the lifecycle status.

6. The device of any preceding claim, further including a boot ROM to store initialization programming instructions that are executed when the device is power up.

7. The device of any preceding claim, wherein the ROM is a one time programmable only memory.

8. A method for self-provisioning a device, the method comprising:
reading a lifecycle status when the device is powered on;
if the lifecycle status indicates that the device is not initialized, generating a secret key and storing the secret key in a non-volatile memory and advancing the lifecycle status; and
enabling an access port, wherein the access port remains disabled if the lifecycle status indicates that the device is not initialized.

9. The method of claim 8, wherein the access port is a test port that allows testing of functional modules.

10. The method of claim 8 or 9, wherein the access port is a debug port that allows debugging of functional modules.

11. The method of any of claims 8 to 10, further including disabling the access port when the access port is used for changing the lifecycle status.
